# EUROPÄISCHE PATENTSCHRIFT

(11) **EP 3 322 923 B1**
(45) Veröffentlichungstag und Bekanntmachung des Hinweises auf die Patenterteilung: **24.04.2019**
(21) Anmeldenummer: 16727631.0
(22) Anmeldetag: 04.06.2016
(51) Int. Cl.: E03C 1/086

(54) **SANITÄRER LEITUNGSANSCHLUSS**
SANITARY LINE ATTACHMENT
RACCORD DE CONDUITE SANITAIRE

(30) Priorität: 14.07.2015 DE 202015004919 U
(43) Veröffentlichungstag der Anmeldung: 23.05.2018
(73) Patentinhaber: Neoperl GmbH, 79379 Müllheim (DE)
(72) Erfinder: KURY, Werner, 79379 Müllheim (DE)
(74) Vertreter: Börjes-Pestalozza, Henrich
(86) Internationale Anmeldenummer: PCT/EP2016/000918
(87) Internationale Veröffentlichungsnummer: WO 2017/008870

(56) Entgegenhaltungen:
- EP-B1- 1 770 225
- US-A- 1 157 574
- US-A- 1 917 553
- US-A- 4 088 327

## Beschreibung

Die Erfindung betrifft einen sanitären Leitungsanschluss, der zumindest in einem Stirnendbereich hülsenförmig ausgebildet ist und im Hülseninneren dieses hülsenförmigen Stirnendbereichs ein Innengewinde trägt zum Anschluss an einen benachbarten Leitungsabschnitt, wobei ein Dichtring vorgesehen ist, der aus einem formstabilen und/oder unelastischen Material hergestellt und zum dichtenden Einspannen zwischen dem Leitungsanschluss und dem benachbarten Leitungsabschnitt vorgesehen ist, welcher Dichtring an seinem Ring-Außenumfang zumindest einen vorstehenden Haltevorsprung hat, der in das Innengewinde im Hülseninneren des hülsenförmigen Stirnendbereichs eingreift, wobei der Dichtring zumindest eine Einformung aufweist.

Aus der US 4,088,327 A ist ein sanitärer Leitungsanschluss der eingangs erwähnten Art vorbekannt, der ein hülsenförmiges Anschlussstück hat, in dessen Hülseninneren ein Innengewinde vorgesehen ist. Dem zum Anschluss an einem benachbarten Leitungsabschnitt vorgesehenen Anschlussstück ist ein Dichtring zum dichtenden Einspannen zwischen dem Leitungsanschluss und dem benachbarten Leitungsabschnitt zugeordnet. Dieser Dichtring weist an seinem Ring-Außenumfang voneinander beabstandete Haltevorsprünge auf, die in das Innengewinde im Hülseninneren des hülsenförmigen Anschlussstücks eingreifen und den Dichtring dort gegen ein Herausfallen sichern. Der im vorbekannten Leitungsanschluss verwendete Dichtring hat eine als Durchbruch im Ringumfang des Dichtrings ausgebildete Einformung, die ein Weiten und Verengen des Dichtringes in seinem Dichtringumfang und somit ein Anpassen des Dichtrings an die verschiedenen lichten Durchmesser unterschiedlich bemessener Anschlussstücke erlaubt.

Aus der US 1,157,574 A und der US 1,917,553 A kennt man bereits sanitäre Leitungsanschlüsse, die ebenfalls zum Verbinden benachbarter Leitungsabschnitte dienen. Während an dem einen Leitungsabschnitt ein muffenförmiges Kupplungsstück mit einem Innengewinde vorgesehen ist, weist der benachbarte andere Leitungsabschnitt ein Kupplungsgegenstück auf, welches Kupplungsgegenstück mit einem Außengewinde in das Innengewinde des erstgenannten Leitungsabschnittes eingeschraubt werden kann. Zwischen den gegenüberliegenden Stirnenden der miteinander verbindbaren Leitungsabschnitte ist ein Dichtring aus elastischem Material vorgesehen, der an seinem Ring-Außenumfang mehrere, in Umfangsrichtung voneinander beabstandete Haltevorsprünge aufweist, die in das Innengewinde im Hülseninneren des muffenförmigen ersten Leitungsabschnitts eingreifen.

Aus der EP 1 770 225 B1 kennt man bereits einen sanitären Leitungsanschluss, der in zumindest einem Stirnendbereich hülsenförmig ausgebildet ist, wobei im Hülseninneren dieses hülsenförmigen Stirnendbereichs ein Innengewinde vorgesehen ist, das zum Anschluss an einem zu- oder abströmseitigen Leitungsabschnitt dient. Im Stirnendbereich zwischen dem vorbekannten Leitungsanschluss und dem benachbarten Leitungsabschnitt ist ein Dichtring dichtend eingespannt, an dessen Außenumfang mehrere, in gleichmäßigen Abständen voneinander beabstandete Haltevorsprünge vorstehen, die in das Innengewinde im Hülseninneren des hülsenförmigen Stirnendbereichs eingreifen. Diese Haltevorsprünge stehen am Außenumfang des Dichtrings derart vor, dass die Haltevorsprünge in das Innengewinde eingreifen und sich dort festklemmen können. Auf diese Weise ist der

Dichtring und mit ihm die im Hülseninneren des vorbekannten Leitungsanschlusses zusätzlich vorgesehenen Bestandteile derart gesichert, dass sich diese Bestandteile nicht unbeabsichtigt beispielsweise durch transportbedingte Erschütterungen lösen -, bei Bedarf aber dennoch leicht voneinander getrennt werden können.

In verschiedenen Anwendungsbereichen sind jedoch Dichtringe aus elastischem Material weniger gut geeignet. Manche solcher Anwendungsbereiche erfordern die Verwendung von Fiberdichtungen. Vergleichbar ausgestaltete Fiberdichtungen lassen sich aufgrund der geringen Elastizität und der hohen Formbeständigkeit des verwendeten Materials nicht beispielsweise in eine hülsenförmige Überwurfmutter einpressen, weil dabei die Haltevorsprünge am Ringaußenumfang eines solchen Dichtringes abbrechen würden. Solche Fiberdichtungen müssen bislang daher separat beigelegt oder während der Lagerung und dem Transport eines Anschlussschlauches an diesen angebunden werden. Dabei besteht jedoch die Gefahr, dass diese Ringdichtungen vom Anwender übersehen oder falsch beziehungsweise gar nicht montiert werden.

Es besteht daher insbesondere die Aufgabe, einen sanitären Leitungsanschluss der eingangs erwähnten Art zu schaffen, der das Risiko einer Nicht- oder auch einer Falschmontage ausschließt, selbst wenn die vorgesehene Anwendung die Verwendung einer formbeständigen und/oder unelastischen Dichtung erfordert.

Die erfindungsgemäße Lösung dieser Aufgabe besteht bei dem sanitären Leitungsanschluss der eingangs erwähnten Art insbesondere darin, dass der Dichtring zumindest zwei Einformungen hat, die als Werkzeugangriffsflächen ausgebildet und mit Abstand voneinander am Ring-Innenumfang angeordnet sind.

Der erfindungsgemäße Leitungsanschluss ist in zumindest einem Stirnendbereich hülsenförmig ausgebildet. In diesem zumindest einen hülsenförmigen Stirnendbereich trägt der Leitungsanschluss ein Innengewinde, das zum Anschluss an einem benachbarten Leitungsabschnitt dient. Um die Trennebene zwischen dem erfindungsgemäßen Leitungsanschluss einerseits und dem benachbarten Leitungsabschnitt andererseits abzudichten, ist in diesem Stirnendbereich zumindest ein Dichtring dichtend eingespannt, an dessen Ring-Außenumfang zumindest ein Haltevorsprung vorsteht. Mit diesem Haltevorsprung greift der erfindungsgemäß verwendete Dichtring in das Innengewinde im Hülseninneren des zumindest einen hülsenförmigen Stirnendbereichs ein. Der erfindungsgemäße Dichtring ist aus einem formstabilen und/oder unelastischen Material hergestellt, das ein Einpressen des Dichtringes in den hülsenförmigen Stirnendbereich nicht zulässt. Der erfindungsgemäße Dichtring weist daher zumindest zwei Einformungen auf, die als Werkzeugangriffsflächen für einen Schraubenzieher oder dergleichen Eindrehwerkzeug ausgebildet und mit Abstand voneinander am Ring-Innenumfang angeordnet sind. Mit Hilfe dieses Eindrehwerkzeuges lässt sich der Dichtring in das Innengewinde im hülsenförmigen Stirnendbereich des Leitungsanschlusses eindrehen. Auch der aus formstabilen und/oder unelastischem Material hergestellte Dichtring bildet nach dem Eindrehen in das Innengewinde eine dort selbsthaltende Dichtung, die bereits herstellerseitig eingebaut werden kann, so dass wirkungsvoll verhindert wird, dass der Montierende diese Dichtung falsch oder gar nicht montiert.

Um das Eindrehen des Dichtringes in den hülsenförmigen Stirnendbereich des erfindungsgemäßen Leitungsanschlusses zu erleichtern und um den lagegerechten und sicheren Halt des Dichtringes im hülsenförmigen Stirnendbereich zu begünstigen, ist es vorteilhaft, wenn der Dichtring eine Dicke größer als eine Gewindesteigung des Innengewindes und vorzugsweise größer/gleich zwei Gewindesteigungen des Innengewindes hat. Bei dieser Ausführungsform greifen alle am Ring-Außenumfang des Dichtringes vorgesehenen Haltevorsprünge vollständig in zumindest eine der Gewindesteigungen ein.

Um zwischen dem erfindungsgemäßen Leitungsanschluss und dem benachbarten Leitungsabschnitt eine dichte Verbindung zu bewerkstelligen, ist es vorteilhaft, wenn der Dichtring als Fiber- oder Faserdichtung ausgebildet oder aus einem Fiber- oder Fasermaterial hergestellt ist.

Eine bevorzugte Ausführungsform gemäß der Erfindung sieht vor, dass der Dichtring an seinem Ringaußenumfang zumindest mit dem zumindest einen Haltevorsprung in das Innengewinde einschneidbar ist.

Um den festen Halt des Dichtringes am Innengewinde zu begünstigen und um eine lagegerechte und nahezu wackelfreie Verbindung des Dichtringes im Innengewinde zu begünstigen, ist es vorteilhaft, wenn am Ring-Außenumfang des Dichtringes mindestens zwei und vorzugsweise drei Haltevorsprünge vorgesehen sind.

Dabei sieht eine bevorzugte Ausführungsform gemäß der Erfindung vor, dass die Haltevorsprünge in gleichmäßigen Abständen um den Ring-Außenumfang des Dichtringes verteilt angeordnet sind.

Eine bevorzugte Anwendung des erfindungsgemäßen Leitungsanschlusses sieht vor, dass dieser Leitungsanschluss als Schlauchanschluss mit Überwurfmutter ausgebildet ist, und dass die Überwurfmutter den hülsenförmigen Stirnendbereich des Leitungsanschlusses bildet.

Weiterbildungen gemäß der Erfindung ergeben sich aus den Ansprüchen in Verbindung mit der Zeichnung sowie der Figurenbeschreibung. Nachstehend wird die Erfindung anhand bevorzugter Ausführungsbeispiele noch näher beschrieben.

Es zeigt:
- Fig. 1: einen flexiblen Schlauch, der an seinem hier dargestellten Schlauchende einen hier längsgeschnittenen Leitungsanschluss hat, wobei der hülsenförmige Stirnendbereich dieses Leitungsanschlusses als Überwurfmutter ausgebildet ist, die in ihrem Hülseninneren ein Innengewinde zum Anschluss des Leitungsanschlusses an einem benachbarten Leitungsabschnitt trägt, in welches Innengewinde ein Dichtring selbsthaltend eingesetzt ist,
- Fig. 2: den Leitungsanschluss des in Figur 1 gezeigten Schlauches, ebenfalls in einer teilgeschnittenen Seitenansicht,
- Fig. 3: den am Innengewinde der Überwurfmutter selbsthaltend gesicherten Dichtring in einem Detail-Längsschnitt in dem in Figur 2 eingekreisten Teilbereich,
- Fig. 4: die Überwurfmutter und den Dichtring in einem Detail-Längsschnitt auf der gegenüberliegenden Seite des am Innenumfang der Überwurfmutter vorgesehenen Innengewindes in dem in Figur 2 umgrenzten Teilbereich,
- Fig. 5: den hier getrennt vom Schlauch gezeigten Leitungsanschluss in einer auseinandergezogenen Perspektivdarstellung seiner Bestandteile, wobei auch hier ein zum Dichtring passendes Eindrehwerkzeug gezeigt ist,

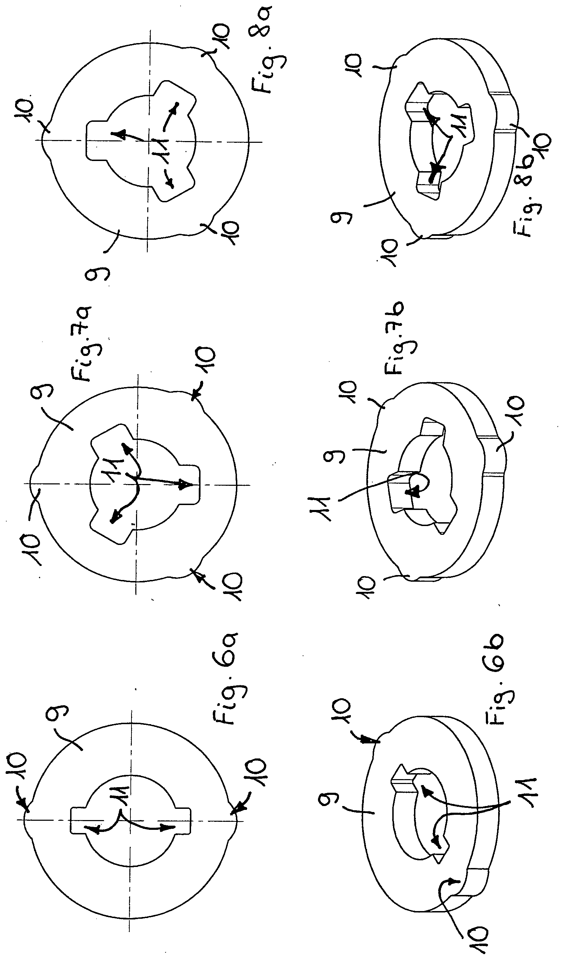

- Fig. 6: den Dichtring aus den Figuren 1 bis 5 in einer Draufsicht (Figur 6a) und in einer perspektivischen Darstellung (Figur 6b),
- Fig. 7: einen ebenfalls in einer Draufsicht (Figur 7a) und einer perspektivischen Darstellung (Figur 7b) gezeigten Dichtring, der hier an seinem Ringinnenumfang drei, in gleichmäßigen Abständen voneinander angeordnete und als Werkzeugangriffsflächen dienende Einformungen hat, und
- Fig. 8: einen ebenfalls in einer Draufsicht (Figur 8a) und einer perspektivischen Darstellung (Figur 8b) dargestellten Dichtring in einer gegenüber Figur 7 nur geringfügig abgeänderten Bauweise.

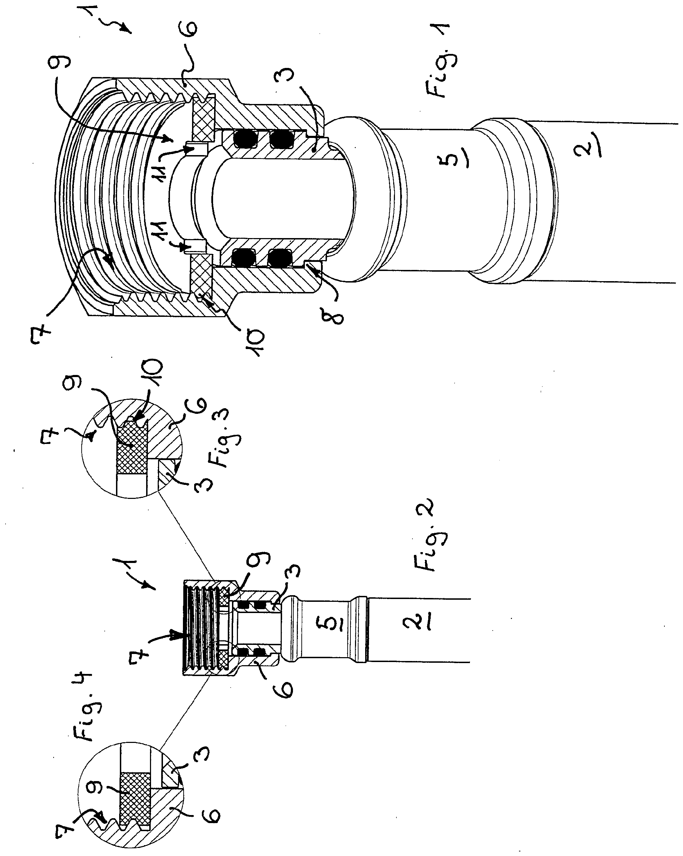

In den Figuren 1 bis 3 ist ein sanitärer Leitungsanschluss 1 dargestellt, der hier als Schlauchanschluss für einen flexiblen Wasserschlauch 2 ausgestattet ist. Der Leitungsanschluss 1 weist einen Anschlussstutzen 3 mit einem Anschlussnippel 4 auf, auf den eines der Schlauchenden der flexiblen Schlauchleitung aufgeschoben ist. Das Schlauchende ist auf dem Anschlussnippel 4 mittels einer vercrimpten Quetschhülse 5 gehalten, die das Schlauchende des Wasserschlauches 2 umgreift.

Der hier dargestellte Leitungsanschluss 1 weist einen hülsenförmigen Stirnendbereich 6 auf, der in seinem Hülseninneren ein Innengewinde 7 trägt zum Anschluss an einem benachbarten, hier nicht weiter gezeigten Leitungsabschnitt. Der hülsenförmige Stirnendbereich 6 ist hier durch eine Überwurfmutter gebildet. Diese Überwurfmutter hintergreift an ihrem, dem Innengewinde 7 abgewandten Endbereich einen am Anschlussstutzen 3 vorgesehenen Ringabsatz 8 derart, dass die Überwurfmutter zwar drehbar, aber in axialer Richtung unverrückbar am Anschlussstutzen 3 gehalten ist.

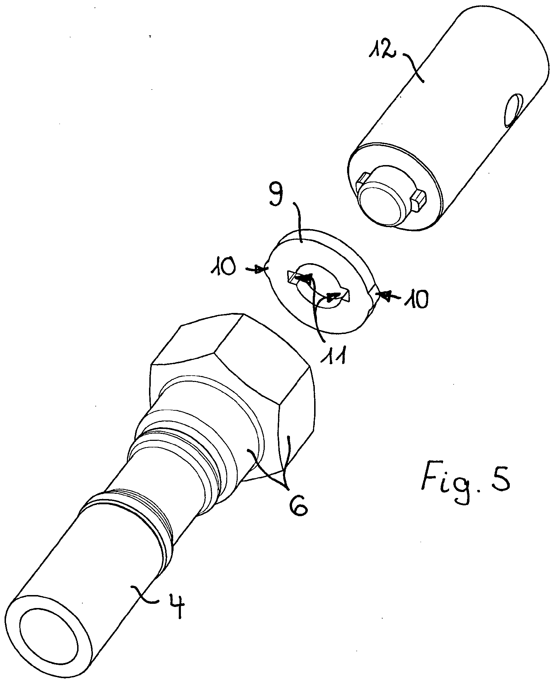

Um die Trennebene zwischen dem Leitungsanschluss einerseits und dem benachbarten Leitungsabschnitt andererseits abzudichten, ist in dem hülsenförmigen Stirnendbereich 6 zumindest ein Dichtring 9 dichtend eingespannt, an dessen Ring-Außenumfang zumindest ein Haltevorsprung 10, vorzugsweise wenigstens zwei Haltevorsprünge und insbesondere - wie hier gezeigt - drei Haltevorsprünge 10 vorstehen. Mit diesen Haltevorsprüngen 10 greift der Dichtring 9 in das Innengewinde 7 im Hülseninneren des hülsenförmigen Stirnendbereichs 6 ein. Der Dichtring 9 ist aus einem formstabilen und/oder unelastischen Material hergestellt, das ein Einpressen des Dichtringes 9 in den hülsenförmigen Stirnendbereich 6 nicht zulässt. Der Dichtring 9 weist daher zumindest zwei, mit Abstand voneinander am Ring-Innenumfang des Dichtringes 9 angeordnete Einformungen 11 auf, die als Werkzeugangriffsflächen für ein in Figur 5 näher abgebildetes Eindrehwerkzeug 12 dienen. Mit Hilfe dieses Eindrehwerkzeuges 12 lässt sich der Dichtring 9 in das Innengewinde 7 im hülsenförmigen Stirnendbereich 6 des Leitungsanschlusses 1 eindrehen und bei Bedarf auch wieder herausdrehen. Auch der aus formstabilem und/oder unelastischem Material hergestellte Dichtring 9 bildet nach dem Eindrehen in das Innengewinde 7 eine dort selbsthaltende Dichtung, die bereits herstellerseitig eingebaut werden kann, so dass wirkungsvoll verhindert wird, dass der Anwender diese Dichtung falsch oder gar nicht montiert.

Aus einem Vergleich der Detail-Darstellungen in den Figuren 3 und 4 wird deutlich, dass der Dichtring 9 eine Dicke größer als eine Gewindesteigung des Innengewindes 7 und vorzugsweise größer/gleich zwei Gewindesteigungen des Innengewindes 7 hat. Auf diese Weise greift der Dichtring 9 mit jedem seiner Haltevorsprünge 10 praktisch vollständig in zumindest eine der Gewindesteigungen ein, und zwar derart, dass der Dichtring 9 in einer etwa im rechten Winkel zur Längsachse des Leitungsanschlusses 1 angeordneten Ebene im Innengenwinde 7 selbsthaltend gesichert ist. Aus den Figuren 3 und 4 ist auch zu erkennen, dass der Dichtring 9 an seinem Ring-Außenumfang zumindest mit dem wenigstens einen Haltevorsprung 10 in das Innengewinde 7 einschneidbar ist. Die Haltevorsprünge 10 sind in gleichmäßigen Abständen um den Ring-Außenumfang des Dichtringes 9 verteilt angeordnet.

Der Dichtring 9 ist hier als Fiber- oder Faserdichtung ausgebildet und aus einem Fiber- oder Fasermaterial hergestellt. Dabei ist der Leitungsanschluss 1 als Schlauchanschluss mit Überwurfmutter ausgebildet, wobei die Überwurfmutter den hülsenförmigen Stirnendbereich 6 des Leitungsanschlusses 1 bildet.

### Bezugszeichenliste

- 1: Leitungsanschluss
- 2: Wasserschlauch
- 3: Anschlussstutzen
- 4: Anschlussnippel
- 5: Quetschhülse
- 6: hülsenförmigen Stirnendbereich
- 7: Innengewinde
- 8: Ringabsatz
- 9: Dichtring
- 10: Haltevorsprung
- 11: Einformungen
- 12: Eindrehwerkzeug

## Patentansprüche

1. Sanitärer Leitungsanschluss (1), der zumindest in einem Stirnendbereich (6) hülsenförmig ausgebildet ist und im Hülseninneren dieses hülsenförmigen Stirnendbereichs (6) ein Innengewinde (7) trägt zum Anschluss an einem benachbarten Leitungsabschnitt, wobei ein Dichtring (9) vorgesehen ist, der aus einem formstabilen und/oder unelastischen Material hergestellt und der zum dichtenden Einspannen zwischen dem Leitungsanschluss und dem benachbarten Leitungsabschnitt vorgesehen ist, welcher Dichtring (9) an seinem Ring-Außenumfang zumindest einen vorstehenden Haltevorsprung (10) hat, der (10) in das Innengewinde (7) im Hülseninneren des hülsenförmigen Stirnendbereichs (6) eingreift, **dadurch gekennzeichnet, dass** der Dichtring (9) zumindest zwei Einformungen (11) aufweist, die als Werkzeugangriffsflächen ausgebildet und mit Abstand voneinander am Ring-Innenumfang angeordnet sind.

2. Sanitärer Leitungsanschluss nach Anspruch 1, **dadurch gekennzeichnet, dass** der Dichtring (9) eine Dicke größer als eine Gewindesteigung des Innengewindes (7) und vorzugsweise größer/gleich zwei Gewindesteigungen des Innengewindes (7) hat.

3. Sanitärer Leitungsanschluss nach Anspruch 1 oder 2, **dadurch gekennzeichnet, dass** der Dichtring (9) als Fiber- oder Faserdichtung ausgebildet oder aus einem Fiber- oder Fasermaterial hergestellt ist.

4. Sanitärer Leitungsanschluss nach einem der Ansprüche 1 bis 3, **dadurch gekennzeichnet, dass** der Dichtring (9) an seinem Ring-Außenumfang zumindest mit dem zumindest einen Haltevorsprung (10) in das Innengewinde (7) einschneidbar ist.

5. Sanitärer Leitungsanschluss nach einem der Ansprüche 1 bis 4, **dadurch gekennzeichnet, dass** am Ring-Außenumfang des Dichtringes (9) mindestens zwei und vorzugsweise drei Haltevorsprünge (10) vorgesehen sind.

6. Sanitärer Leitungsanschluss nach Anspruch 5, **dadurch gekennzeichnet, dass** die Haltevorsprünge (10) in gleichmäßigen Abständen um den Ring-Außenumfang des Dichtringes (9) verteilt angeordnet sind.

7. Sanitärer Leitungsanschluss nach einem der Ansprüche 1 bis 6, **dadurch gekennzeichnet, dass** der Leitungsanschluss als Schlauchanschluss mit Überwurfmutter ausgebildet ist und dass die Überwurfmutter den hülsenförmigen Stirnendbereich (6) des Leitungsanschlusses (1) bildet.

## Claims

1. Sanitary line attachment (1) which is of sleeve-shape design at least in one front end region (6) and, in the sleeve interior of said sleeve-shaped front end region (6), bears an internal thread (7) for attachment to an adjacent line portion, wherein a sealing ring (9) is provided which is produced from a dimensionally stable and/or inelastic material for sealing clamping between the line attachment and the adjacent line portion, the ring outer circumference of which sealing ring (9) has at least one protruding holding projection (10), which holding projection (10) engages in the internal thread (7) in the sleeve interior of the sleeve-shaped front end region (6), **characterized in that** the sealing ring (9) at least two indentations (11) which are designed as tool engagement surfaces and are arranged at a distance from one another on the ring inner circumference.

2. Sanitary line attachment according to Claim 1, **characterized in that** the sealing ring (9) has a thickness greater than a thread pitch of the internal thread (7) and preferably greater than/equal to two thread pitches of the internal thread (7).

3. Sanitary line attachment according to Claim 1 or 2, **characterized in that** the sealing ring (9) is designed as a fiber seal or is produced from a fiber material.

4. Sanitary line attachment according to one of Claims 1 to 3, **characterized in that** the ring outer circumference of the sealing ring (9) is cuttable into the internal thread (7) at least with the at least one holding projection (10).

5. Sanitary line attachment according to one of Claims 1 to 4, **characterized in that** at least two and preferably three holding projections (10) are provided on the ring outer circumference of the sealing ring (9).

6. Sanitary line attachment according to Claim 5, **characterized in that** the holding projections (10) are arranged distributed at uniform distances around the ring outer circumference of the sealing ring (9).

7. Sanitary line attachment according to one of Claims 1 to 6, **characterized in that** the line attachment is designed as a tube attachment with a union nut, and **in that** the union nut forms the sleeve-shaped front end region (6) of the line attachment (1).

## Revendications

1. Raccord de conduite sanitaire (1), qui est réalisé en forme de douille au moins dans une région d'extrémité frontale (6) et qui porte dans l'intérieur de cette région d'extrémité frontale en forme de douille (6) un filet intérieur (7) pour le raccordement à une partie de conduite voisine, dans lequel il est prévu un anneau d'étanchéité (9), qui est fabriqué en un matériau de forme stable et/ou inélastique et qui est prévu pour le serrage étanche entre le raccord de conduite et la partie de conduite voisine, anneau d'étanchéité (9) qui comporte à sa périphérie annulaire extérieure au moins une saillie de retenue saillante (10), qui (10) s'engage dans le filet intérieur (7) dans l'intérieur de douille de la région d'extrémité frontale en forme de douille (6), **caractérisé en ce que** l'anneau d'étanchéité (9) présente au moins deux enfoncements (11), qui sont réalisés sous forme de faces d'application d'outil et qui sont disposés à distance l'un de l'autre sur la périphérie intérieure de l'anneau.

2. Raccord de conduite sanitaire selon la revendication 1, **caractérisé en ce que** l'anneau d'étanchéité (9) présente une épaisseur supérieure à un pas de filet du filet intérieur (7) et de préférence supérieure/égale à deux pas de filet du filet intérieur (7).

3. Raccord de conduite sanitaire selon la revendication 1 ou 2, **caractérisé en ce que** l'anneau d'étanchéité (9) est formé par un joint fibreux ou en fibres ou est fabriqué en un matériau fibreux ou en fibres.

4. Raccord de conduite sanitaire selon l'une quelconque des revendications 1 à 3, **caractérisé en ce que** l'anneau d'étanchéité (9) peut être entaillé à sa périphérie annulaire extérieure au moins avec ladite au moins une saillie de retenue (10) dans le filet intérieur (7).

5. Raccord de conduite sanitaire selon l'une quelconque des revendications 1 à 4, **caractérisé en ce qu'**il est prévu à la périphérie annulaire extérieure de l'anneau d'étanchéité (9) au moins deux et de préférence trois saillies de retenue (10).

6. Raccord de conduite sanitaire selon la revendication 5, **caractérisé en ce que** les saillies de retenue (10) sont disposées de façon répartie à des distances uniformes autour de la périphérie annulaire extérieure de l'anneau d'étanchéité (9).

7. Raccord de conduite sanitaire selon l'une quelconque des revendications 1 à 6, **caractérisé en ce que** le raccord de conduite est formé par un raccord de tuyau flexible avec un écrou-raccord et **en ce que** l'écrou-raccord forme la région d'extrémité frontale en forme de douille (6) du raccord de conduite (1).
